# EUROPEAN PATENT SPECIFICATION

(11) **EP 3 766 630 B1**
(45) Date of publication and mention of the grant of the patent: **24.01.2024**
(21) Application number: 19767159.7
(22) Date of filing: 05.02.2019
(51) Int. Cl.: B23K 26/38, B23K 26/142, B23K 26/382

(54) **LASER PROCESSING MACHINE AND LASER PROCESSING METHOD**
LASERBEARBEITUNGSMASCHINE UND LASERBEARBEITUNGSVERFAHREN
MACHINE DE TRAITEMENT AU LASER ET PROCÉDÉ DE TRAITEMENT AU LASER

(30) Priority: 12.03.2018 JP 2018044112
(43) Date of publication of application: 20.01.2021
(73) Proprietor: Amada Co., Ltd., Isehara-shi, Kanagawa 259-1196 (JP)
(72) Inventor: YAMANASHI, Takaaki, Isehara-shi, Kanagawa 259-1196 (JP); FUNAKI, Koji, Isehara-shi, Kanagawa 259-1196 (JP)
(74) Representative: Grünecker Patent- und Rechtsanwälte PartG mbB
(86) International application number: PCT/JP2019/004034
(87) International publication number: WO 2019/176379

(56) References cited:
- EP-A1- 3 272 453
- JP-A- H09 206 975
- JP-A- 2003 305 584
- JP-A- 2012 187 606
- JP-A- 2015 071 175
- JP-A- 2017 121 660

## Description

### [TECHNICAL FIELD]

The present invention relates to a laser processing machine and a laser processing method for processing a sheet metal with a laser beam.

### [BACKGROUND ART]

A laser processing machine has become popular that cuts a sheet metal by using a laser beam emitted from a laser oscillator. In a case where the laser processing machine cuts the sheet metal by using the laser beam and creates a product having a predetermined shape, the laser processing machine forms a hole referred to as a piercing hole to a position outside the product from the sheet metal by using the laser beam. After performing a piercing process of forming a piercing hole to the sheet metal by using the laser beam, the laser processing machine performs an approaching process of cutting to a predetermined positon of an outer periphery of the product, and then cuts the sheet metal along the outer periphery of the product.
Patent Literature 2 discloses a laser processing machine according to the preamble of independent claim 1. Patent Literature 3 discloses a further example relating to laser beam machining.

### [Citation List]

### [Patent Literature]

[Patent Literature 1] Japanese Patent No. 3761687
[Patent Literature 2] EP 3 272 453 A1
[Patent Literature 3] JP 2003 305584 A

### [SUMMARY OF THE INVENTION]

The laser processing machine performs the piercing process or the cutting of the sheet metal by irradiating the sheet metal with the laser beam while jetting assist gas onto the sheet metal according to a material of the sheet metal. During the approaching process or the cutting along an outer periphery of the product, molten metal melted by heat generated from the laser beam is blown away by the assist gas to the back side of the sheet metal through a previously cut groove. However, during the piercing process, a groove or a hole is not formed. Therefore, the molten metal is blown away by the assist gas to the surface of the sheet metal and is attached to the vicinity of the piercing hole.

### (See Patent Literature 1)

The laser beam passes through the center of a circular opening of a nozzle and assist gas is jetted onto the sheet metal by passing through the vicinity of the laser beam. In a case where the sheet metal is thin, assist gas acts almost uniformly to the molten metal in a peripheral direction and the molten metal is blown away almost uniformly. However, if the sheet metal is thick, a time during which a piercing hole is formed becomes long and a phenomenon occurs in which melting positions slightly move in a surface direction. Then, the amount of molten metal does not become uniform in a peripheral direction, the amount of molten metal is biased in a predetermined direction, and by a direction in which the amount of molten metal is biased, a large amount of molten metal is blown away. Directions in which the amount of molten metal is biased are random, and thus, directions in which a large amount of molten metal is blown away become random.

Accordingly, to prevent molten metal that is blown away from being attached to a product, a piercing hole needs to be formed to a position sufficiently away from the product. In a case where a plurality of products are cut from the sheet metal, a piercing hole is formed between adjacent products, and thus, a sufficient distance needs to be provided. Therefore, a maximum number of products that can be cut may not be increased and a usage rate may not be improved. Therefore, sometimes, the molten metal is attached to the vicinity of the piercing hole and deposited metal that is solidified (sputtered material) deteriorates the stability of the approaching process and causes processing defects.

An object of one or more embodiments is to provide a laser processing machine and a laser processing method that can control a direction in which molten metal is attached so as to reduce the amount of molten metal attached on a product side in the vicinity of a piercing hole when performing a piercing process of forming the piercing hole to a sheet metal while jetting assist gas onto the sheet metal.

A first aspect of one or more embodiment provides a laser processing machine that includes a processing head having a tip attached with a nozzle with an opening through which a laser beam is emitted; a moving mechanism configured to move the processing head along a surface of the sheet metal; a beam displacement mechanism configured to displace the position of the laser beam emitted through the opening in the opening; an assist gas supply device configured to, supply to the processing head, assist gas to be jetted onto the sheet metal through the opening in a case where the sheet metal is processed; and a control device that controls the beam displacement mechanism such that, as the processing performed on the sheet metal, when performing a piercing process of forming a piercing hole outside a product cut from the sheet metal by using the laser beam, a position of the laser beam emitted through the opening in the opening is displaced from the center of the opening to a position in the direction away from the product.

A second aspect of one or more embodiments provides a laser processing method comprising: displacing a position of a laser beam emitted through an opening of a nozzle attached to a tip of a processing head in the opening from a center of the opening to a position in a direction away from a product in a case where a piercing process of forming a piercing hole outside the product to cut off the product from a sheet metal by using the laser beam is performed; and jetting assist gas onto the sheet metal through the opening and blowing away molten metal of the sheet metal melted by heat generated from the laser beam.

In accordance with a laser processing machine and a laser processing method according to one or more embodiments, when performing a piercing process of forming a piercing hole to the sheet metal while jetting assist gas onto the sheet metal, it is possible to control a direction in which the molten metal is attached to reduce the amount of molten metal attached on the product side in the vicinity of the piercing hole.

### [BRIEF DESCRIPTION OF THE DRAWINGS]

FIG. 1 is a diagram illustrating an example of an entire configuration of a laser processing machine according to one or more embodiments.
FIG. 2 is a perspective view illustrating an example of a more particular configuration of a collimator unit and a processing head in a laser processing machine according to one or more embodiments.
FIG. 3A is a side view schematically illustrating a piercing processing operation in a case where a sheet metal is thin.
FIG. 3B is a side view schematically illustrating a piercing processing operation in a case where a sheet metal is thick.
FIG. 4 is a partial plan view illustrating a state in which a plurality of rectangular products are blanked in a sheet metal.
FIG. 5A is a partial plan view illustrating a relationship between a position for piercing and a position of a nozzle in a normal piercing process.
FIG. 5B is a partial plan view illustrating a relationship between a position for piercing and a position of a nozzle in a piercing process adopting a first displacement method.
FIG. 5C is a partial plan view illustrating a relationship between a position for piercing and a position of a nozzle in a piercing process adopting a second displacement method.
FIG. 6 is a diagram for illustrating a displacement of a position of a sheet metal irradiated with a laser beam by a beam displacement mechanism.
FIG. 7 is a side view and a plan view illustrating a way molten metal is blown away in a case where a position of a laser beam with which a sheet metal is irradiated is displaced by a beam displacement mechanism.
FIG. 8 is a partial plan view illustrating an example of a state in which a sputtered material is attached in a case where a piercing process is performed by a laser processing machine and a laser processing method according to one or more embodiments.
FIG. 9 is a plan view illustrating a state in which four products are blanked in a sheet metal.
FIG. 10A is a partial plan view illustrating a relationship between a position for piercing and a position of a nozzle in a normal piercing process in a case where a piercing process is performed to a product 210d illustrated in FIG. 9.
FIG. 10B is a partial plan view illustrating a relationship between a position for piercing and a position of a nozzle in a piercing process when adopting a third displacement method in a case where a piercing process is performed to a product 210d illustrated in FIG. 9.
FIG. 10C is a partial plan view illustrating a relationship between a position for piercing and a position of a nozzle in a piercing process when adopting a fourth displacement method in a case where a piercing process is performed to a product 210d illustrated in FIG. 9.
FIG. 11 is a flowchart illustrating a processing operation performed to a sheet metal by a laser processing machine according to one or more embodiments and processing performed to a sheet metal based on a laser processing method according to one or more embodiments.
FIG. 12 is a diagram for explaining definitions of a widening angle of a sputtered material attached to the vicinity of a piercing hole and a direction angle difference of the sputtered material.
FIG. 13A is a diagram illustrating a widening-determination degree defined according to a widening angle.
FIG. 13B is a diagram illustrating a direction-determination degree defined according to a direction angle difference.
FIG. 14A is a diagram illustrating relationships between displacement amounts of a position of a sheet metal irradiated with a laser beam in a case where a nozzle having a diameter of 2 mm is used, and widening-determination degrees, direction-determination degrees, and evaluations.
FIG. 14B is a diagram illustrating relationships between displacement amounts of a position of a sheet metal irradiated with a laser beam in a case where a nozzle having a diameter of 3 mm is used, and widening-determination degrees, direction-determination degrees, and evaluations.

### [MODES FOR CARRYING OUT THE INVENTION]

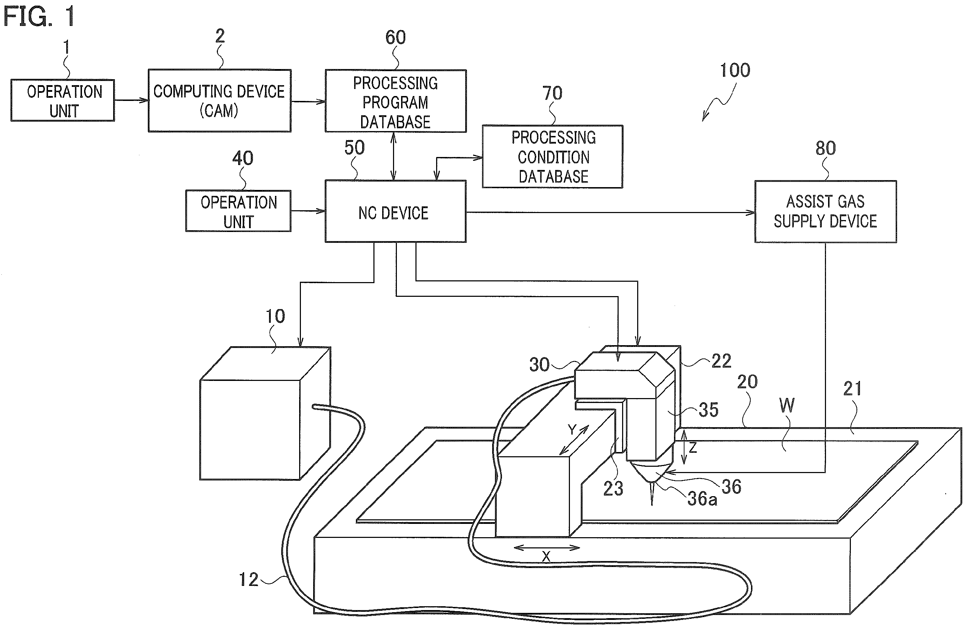

A laser processing machine and a laser processing method according to one or more embodiments are described below with reference to the accompanying drawings. A laser processing machine 100 illustrated in FIG. 1 includes a laser oscillator 10 that generates and emits a laser beam, a laser processing unit 20, and a process fiber 12 that transmits the laser beam emitted from the laser oscillator 10 to the laser processing unit 20. Further, the laser processing machine 100 includes an operation unit 1, a computing device 2 functioning as a CAM, an operation unit 40, an NC device 50, a processing program database 60, a processing condition database 70, and an assist gas supply device 80.

The NC device 50 is an example of a control device that controls each portion of the laser processing machine 100. The operation unit 1 and the computing device 2 may be provided outside of the laser processing machine 100 as a host device relative to the laser processing machine 100.

As the laser oscillator 10, a laser oscillator that amplifies an excitation beam emitted from a laser diode to emit a laser beam having a predetermined wavelength or a laser oscillator that directly uses a laser beam emitted from a laser diode is preferable. Examples of the laser oscillator 10 include a solid laser oscillator, a fiber laser oscillator, a disk laser oscillator, and a direct diode laser oscillator (DDL oscillator).

The laser oscillator 10 emits a 1 µm band laser beam having a wavelength of 900 nm to 1100 nm. The fiber laser oscillator and the DDL oscillator will be described as examples. The fiber laser oscillator emits a laser beam having a wavelength of 1060 nm to 1080 nm. The DDL oscillator emits a laser beam having a wavelength of 910 nm to 950 nm.

The laser processing unit 20 includes a processing table 21 on which a sheet metal W as a processing target is placed, a gate type X-axis carriage 22, a Y-axis carriage 23, a collimator unit 30 fixed to the Y-axis carriage 23, and a processing head 35. The X-axis carriage 22 is configured to be movable on the processing table 21 in an X-axis direction. The Y-axis carriage 23 is configured to be movable on the X-axis carriage 22 in a direction of a Y-axis perpendicular to an X-axis. The X-axis carriage 22 and the Y-axis carriage 23 function as a moving mechanism for moving the processing head 35 along a surface of the sheet metal W in an X-axis direction, a Y-axis direction, or an arbitrary combination direction of the X-axis and the Y-axis.

The processing head 35 has, at a tip portion, a circular opening 36a through which a laser beam is emitted, and a nozzle 36 is attached to the processing head 35. The sheet metal W is irradiated with a laser beam emitted through the opening 36a of the nozzle 36.

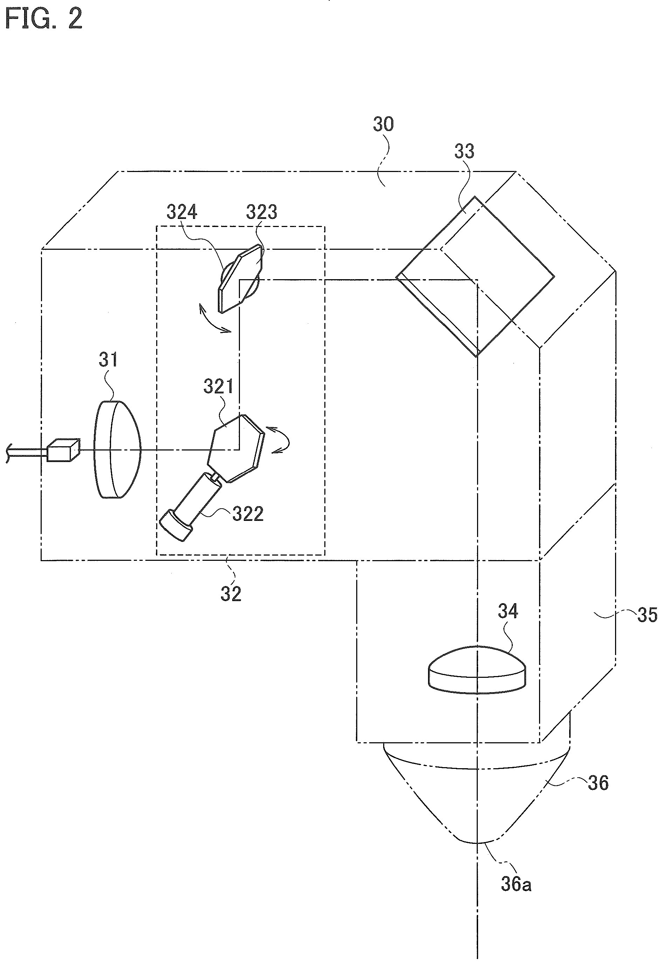

As illustrated in FIG. 2, the collimator unit 30 includes a collimation lens 31 for converting a laser beam that is divergent light emitted from the process fiber 12 into parallel light (collimated light). Further, the collimator unit 30 includes a galvano scanner unit 32 and a bend mirror 33 for reflecting a laser beam emitted from the galvano scanner unit 32 downward in a direction of a Z-axis perpendicular to the X-axis and the Y-axis. The processing head 35 includes a focusing lens 34 that focuses the laser beam reflected from the bend mirror 33 to irradiate the sheet metal W with the focused laser beam.

The laser processing machine 100 is centered such that a laser beam to be emitted through the opening 36a of the nozzle 36 is positioned at the center of the opening 36a. In a standard state, the laser beam is emitted through the center of the opening 36a. The galvano scanner unit 32 functions as a beam displacement mechanism that displaces a position of a laser beam, in the opening 36a that propagates in the processing head 35 and is emitted through the opening 36a. As a result, the galvano scanner unit 32 displaces a position where the sheet metal W is irradiated with a laser beam to a position away by a predetermined distance from a position immediately below the center of the opening 36a.

The galvano scanner unit 32 is an example of the beam displacement mechanism, and the beam displacement mechanism is not limited to the galvano scanner unit 32.

The galvano scanner unit 32 includes a scanning mirror 321 for reflecting a laser beam emitted from the collimation lens 31 and a driver 322 that rotates the scanning mirror 321 to have a predetermined angle. Further, the galvano scanner unit 32 includes a scanning mirror 323 for reflecting a laser beam emitted from the scanning mirror 321 and a driver 324 that rotates the scanning mirror 323 to have a predetermined angle.

The laser processing machine 100 configured as above cuts the sheet metal W with a laser beam emitted from the laser oscillator 10 to manufacture a product having a predetermined shape. At this time, the laser processing machine 100 applies a piercing process to a position outside the product of the sheet metal W with a laser beam and cuts a linear approach path extending from a piercing hole to a predetermined position of an outer periphery of a product. When the laser beam reaches a predetermined position of an outer periphery of the product that is an end portion of the approach path on the product side, the laser processing machine 100 cuts the sheet metal W along the outer periphery of the product to manufacture a product. An approaching process of cutting a path from a piercing hole to an outer periphery of the product is typically performed in a straight line, but may be performed in an arc shape.

Next, a specific method for controlling a direction in which molten metal in the vicinity of a piercing hole is attached in a case where a piercing process is applied to the sheet metal W while jetting assist gas onto the sheet metal W. In accordance with a laser processing machine and a laser processing method according to one or more embodiments, by controlling a direction in which molten metal in the vicinity of a piercing hole is attached, it is possible to reduce the amount of molten metal attached to a product side. In accordance with a laser processing machine and a laser processing method according to one or more embodiments, it is possible to prevent molten metal from being attached to the product side in the vicinity of the piercing hole.

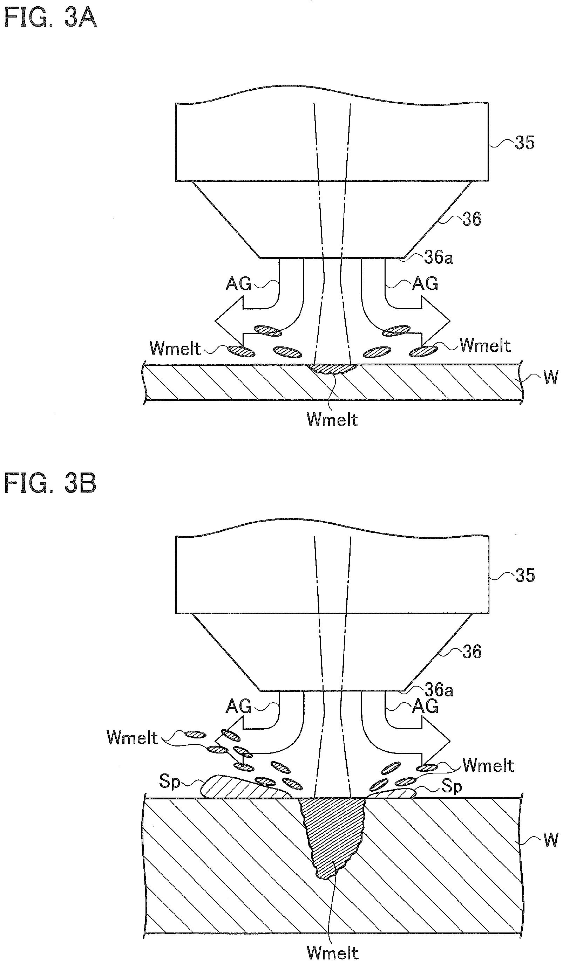

FIG. 3A and FIG. 3B schematically illustrate how a piercing process is performed to the sheet metal W based on a typical laser processing method. That is, the center of the opening 36a is positioned immediately above a position to be formed with a piercing process, and FIG. 3A and FIG. 3B illustrate a piercing process of irradiating a position of the sheet metal W corresponding to a position immediately below the center of the opening 36a with a laser beam. FIG. 3A illustrates a case where the sheet metal W is thin, and FIG. 3B illustrates a case where the sheet metal W is thick.

In FIG. 3A, in a case where a piercing process is applied to the sheet metal W, the NC device 50 moves the processing head 35 upward so as to move the nozzle 36 away from the sheet metal W. Accordingly, a beam waist of the laser beam illustrated with one-dot chain lines is positioned upward away from the sheet metal W. Depending on the adjustment of lens, the beam waist can be set to a surface of or inside the sheet metal W and a position of the beam waist may be freely selected.

The sheet metal W is irradiated with the laser beam that passes through the center of the opening 36a and, metal at an irradiation position is melted by heat of the laser beam and becomes molten metal Wmelt. Assist gas AG supplied, by the assist gas supply device 80, to the processing head 35 passes through the opening 36a and is jetted onto the sheet metal W. The assist gas AG works almost uniformly on the molten metal Wmelt in a peripheral direction and the molten metal Wmelt is blown away in the vicinity of a position of a piercing hole almost uniformly. Both the blown molten metal Wmelt and a deposited metal lump that is attached to the sheet metal W and solidified are sometimes referred to as sputtered materials, but in one or more embodiments, the deposited metal lump is referred to as a sputtered material.

In the thick sheet metal W illustrated in FIG. 3B, a time during which a piercing hole is formed becomes long, and a phenomenon sometimes occurs in which a melting position a position immediately below the center of the opening 36a slightly moves in a surface direction. Then, the amount of molten metal Wmelt does not become uniform in a peripheral direction, is biased in a predetermined direction, and a larger amount of molten metal Wmelt is blown away in a direction in which the amount of molten metal Wmelt is biased.

FIG. 3B illustrates, in a left direction, a state in which a large amount of molten metal Wmelt is blown away and a large amount of sputtered materials Sp is attached in a left direction of a position of the piercing hole. Directions in which the amount of molten metal Wmelt is biased are random, and thus, direction in which a large amount of molten metal Wmelt is blown away and a large amount of sputtered materials Sp is attached become random.

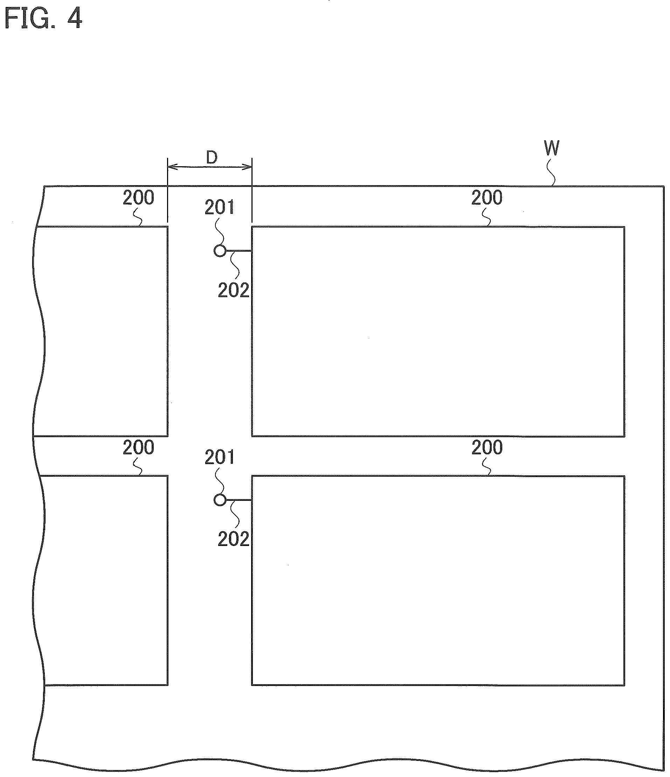

A case illustrated in FIG. 4 is assumed in which a plurality of rectangular products 200 is blanked in the sheet metal W and the laser processing machine 100 cuts each product 200. The computing device 2 generates a processing program in which a piercing process is performed to a position illustrated in FIG. 4, the piercing hole 201 is formed, and thereafter, an approach path 202 is cut, and the sheet metal W is cut from an end portion of the approach path 202 on the product 200 side along an outer periphery of the product 200. The processing program is stored in the processing program database 60.

The NC device 50 reads the processing program from the processing program database 60 and selects any condition included in a plurality of processing conditions stored in the processing condition database 70. The NC device 50 controls the laser processing machine 100 to process the sheet metal W based on the read processing program and the selected processing condition.

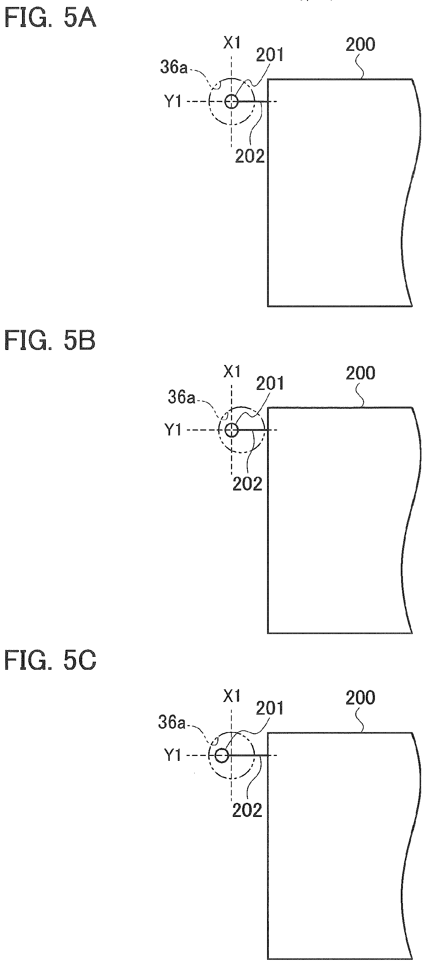

As illustrated in FIG. 5A, according to the processing program, a position to be formed with a piercing hole 201 and to receive a piercing process is set at coordinates (X1, Y1) on the sheet metal W. In a case where a laser beam is emitted through the center of the opening 36a, the NC device 50 may position the processing head 35 such that the center of the opening 36a is positioned at the coordinates (X1, Y1). In a case where the center of the opening 36a is positioned at the coordinates (X1, Y1), the center of the opening 36a is positioned immediately above a position to be formed with the piercing hole 201.

In one or more embodiments, to control a direction in which the molten metal Wmelt is blown away and the sputtered material Sp is attached, by adopting a first displacement method illustrated in FIG. 5B or a second displacement method illustrated in FIG. 5C, a position in which the sheet metal W is irradiated with a laser beam is moved to a position displaced from a position immediately below the center of the opening 36a.

As illustrated in FIG. 5B, in the first displacement method, the NC device 50 displaces the processing head 35 on the product 200 side along the approach path 202 such that the center of the opening 36a is positioned immediately above a position on the approach path 202 displaced on the product 200 side from the coordinates (X1, Y1). In addition, the NC device 50 changes an angle of the scanning mirror 321 or 323 of the galvano scanner unit 32 such that a position in which the sheet metal W is irradiated with a laser beam is set at the coordinates (X1, Y1). As a result, a position in which the sheet metal W is irradiated with a laser beam is displaced on the side away from the product 200 from a position immediately below the center of the opening 36a.

As illustrated in FIG. 5C, in the second displacement method, the NC device 50 positions the processing head 35 such that the center of the opening 36a is positioned at the coordinates (X1, Y1). In addition, the NC device 50 changes an angle of the scanning mirror 321 or 323 of the galvano scanner unit 32 such that a position in which the sheet metal W is irradiated with a laser beam is positioned to a position on an extended line of the approach path 202, which position is on the side away from the product 200 than the coordinates (X1, Y1). As a result, a position in which the sheet metal W is irradiated with a laser beam is displaced on the side away from the product 200 instead of a position immediately below the center of the opening 36a.

In this manner, by adopting the first or second displacement method, the NC device 50 controls the galvano scanner unit 32 to displace a position of a laser beam emitted through the opening 36a in the opening 36a to a position away from the center of the opening 36a on the opposite side of the product 200. According to the first displacement method, a position of a laser beam in the opening 36a is a position away from the center of the opening 36a on the opposite side of the product 200 and is displaced to a position to be formed with the piercing hole 201, i.e., a position corresponding to the coordinates (X1, Y1). According to the second displacement method, a position of a laser beam in the opening 36a is displaced to a position corresponding to a position away from the coordinates (X1, Y1) on the opposite side of the product 200.

In a case where the second displacement method illustrated in FIG. 5C is adopted, it is necessary to modify the processing program such that the NC device 50 changes a position to be formed with the piercing hole 201 and extends the approach path 202. In some cases, an interference between outer periphery cutting lines and piercing process positions of adjacent products need to be considered, and sometimes processes become complicated. Accordingly, it is preferable to adopt the first displacement method rather than the second displacement method.

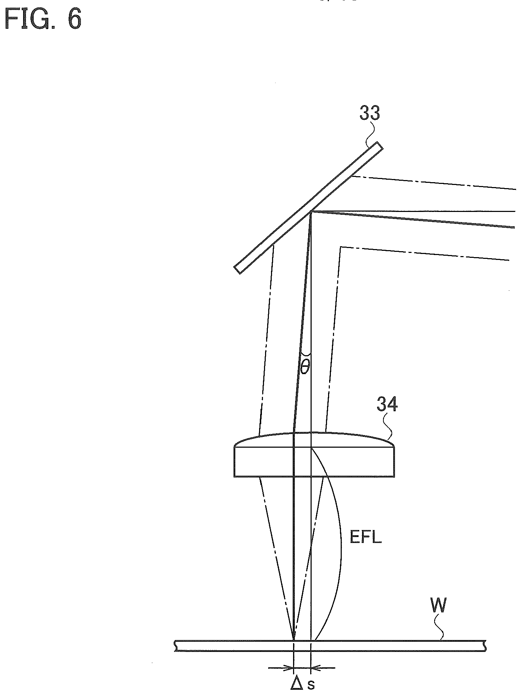

In FIG. 6, a thin solid line that is folded by the bend mirror 33 and passes through the focusing lens 34 represents an optical axis of the laser beam in a case where the laser processing machine 100 is in a standard state. It is assumed that by an action of the galvano scanner unit 32, a position of the optical axis of the laser beam is displaced from a position illustrated with a thin solid line to a position illustrated with a thick solid line. In a case where the laser beam reflected from the bend mirror 33 is tilted by an angle θ, a position in the sheet metal W irradiated with a laser beam is displaced by a distance Δs.

More particularly, by an operation of the galvano scanner unit 32 positioned in front of the bend mirror 33, an angle of the optical axis of the laser beam incident on the bend mirror 33 changes, and the optical axis deviates from the center of the bend mirror 33. In FIG. 6, for simplification, a position in the bend mirror 33 on which the laser beam is incident before and after the operation of the galvano scanner unit 32 is set to be the same position.

In a case where it is assumed that a focal length of the focusing lens 34 is an EFL (Effective Focal Length), the distance Δs is calculated as EFL×sinθ. The NC device 50 may cause the galvano scanner unit 32 to tilt an angle of the optical axis of the laser beam by the angle θ to displace the laser beam by a preset distance Δs. The distance Δs is a distance less than a radium of the opening 36a and is preferably a distance that is equal to or less than a maximum difference obtained by subtracting a predetermined allowance from the radius of the opening 36a.

In a case where the galvano scanner unit 32 is caused to displace a position of the sheet metal W irradiated with a laser beam by the distance Δs, strictly speaking, a position of a beam waist in a thickness direction of the sheet metal W set in a state in which a position irradiated with a laser beam is not displaced is shifted. A problem does not substantially occurs by shifting a position of a beam waist because the distance Δs has several tens to several hundreds µm. In a case where it is necessary to adjust a position of a beam waist, for example, the focusing lens 34 may be displaced in a Z-axis direction.

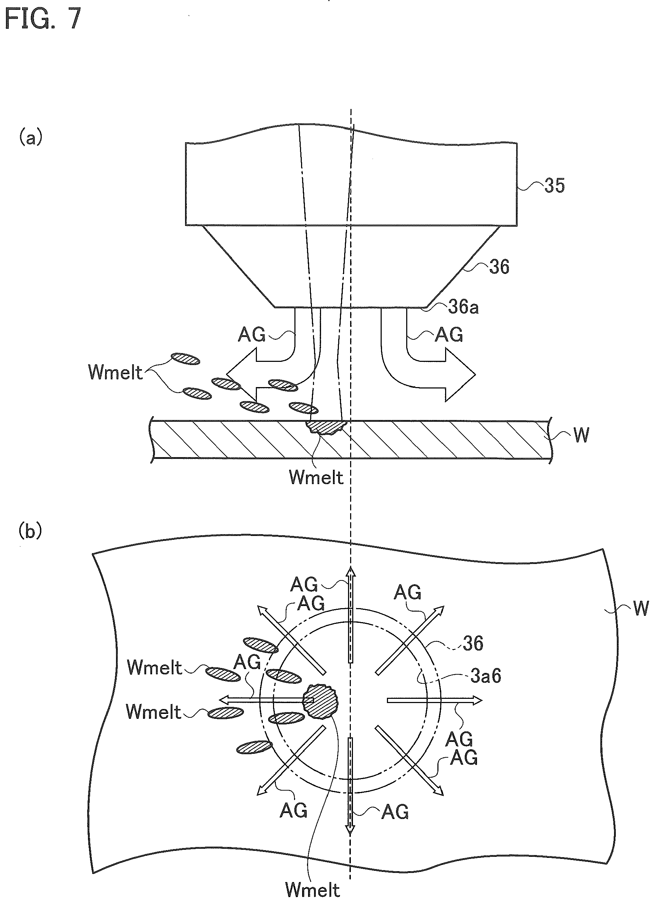

FIG. 7(a) schematically illustrates an operation of forming a piercing hole to the sheet metal W by using a laser beam displaced from the center of the opening 36a to the outside when seen from the side of the processing head 35 and FIG. 7(b) schematically illustrates a state in which the sheet metal W is viewed from the top of the sheet metal W. As illustrated in FIG. 7, the assist gas AG is uniformly jetted onto the sheet metal W in a peripheral direction, but since a laser beam used for the irradiation of the sheet metal W is displaced, the molten metal Wmelt is blown away in a direction in which a laser beam is displaced.

FIG. 7(a) illustrates a case where the sheet metal W is thin as similar to FIG. 3A, but the same applies to a case where the sheet metal W is thick. Even if the amount of molten metal Wmelt is biased on the product 200 side in a case where the sheet metal W is thick, the distance Δs in which a laser beam is displaced on the sheet metal W is considerably larger than a distance in which the amount of molten metal Wmelt is biased, and thus, the molten metal Wmelt is blown away in a direction in which a laser beam is displaced.

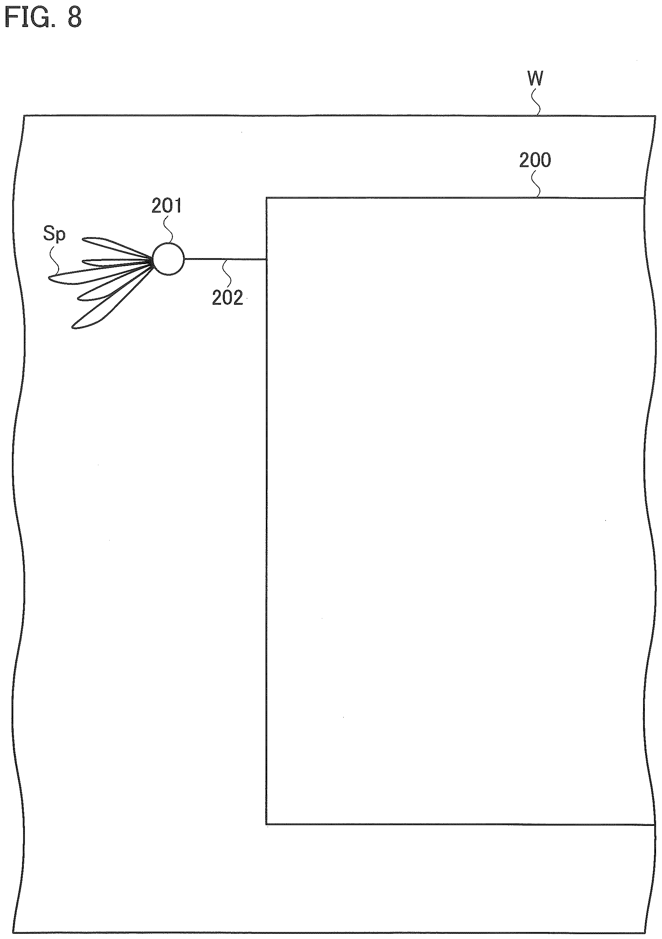

In accordance with the laser processing machine and the laser processing method according to one or more embodiments, as illustrated in FIG. 8, it is possible to make a control such that the sputtered material Sp is attached to a portion of the sheet metal W on a side opposite to a side of the product 200 in the vicinity of the piercing hole 201 and is not substantially attached to a portion of the sheet metal W on the product 200 side. Accordingly, a distance D between the adjacent products 200 illustrated in FIG. 4 can be reduced because the piercing hole 201 can be formed near the product 200. As a result, the laser processing machine and the laser processing method according to one or more embodiments, a usage rate can be improved.

Further, in accordance with the laser processing machine and the laser processing method according to one or more embodiments, the sputtered material Sp is not substantially attached to the approach path 202, and thus, the approaching process is stable and the possibility of the occurrence of processing defects can be reduced.

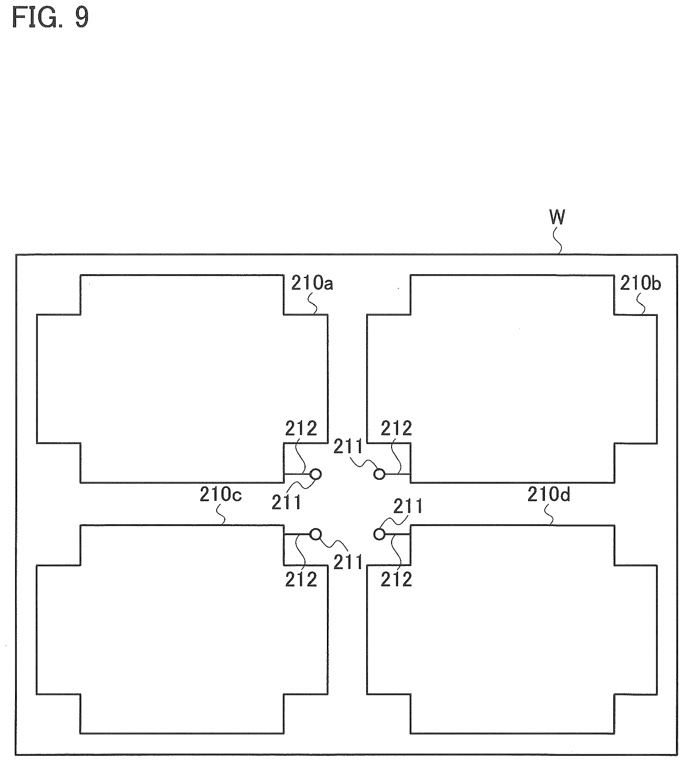

Next, as illustrated in FIG. 9, a case is assumed in which products 210a to 210d each having a rectangular shape whose four corner portions are cut off are blanked in the sheet metal W and the laser processing machine 100 cuts each of the products 210a to 210d. Piercing holes 211 and the approach paths 212 are set in the central non-product area for respective products 210a to 210d.

As similar to FIG. 5A or FIG. 5B, in FIG. 9 also, when performing piercing processes and forming the piercing hole 211, the NC device 50 may make a control to displace a position of a laser beam with which the sheet metal W is irradiated from a position immediately below the center of the opening 36a to a position on the side away from the product 200 in a direction along the approach path 212.

A direction for displacing a position of a laser beam with which the sheet metal W is irradiated is not limited to a direction along the approach path 212. Set to a processing program is an angle direction for displacing a position of a laser beam with which the sheet metal W is irradiated and the NC device 50 may make a control to displace a position of a laser beam with which the sheet metal W is irradiated from a position immediately below the center of the opening 36a to the set angle direction.

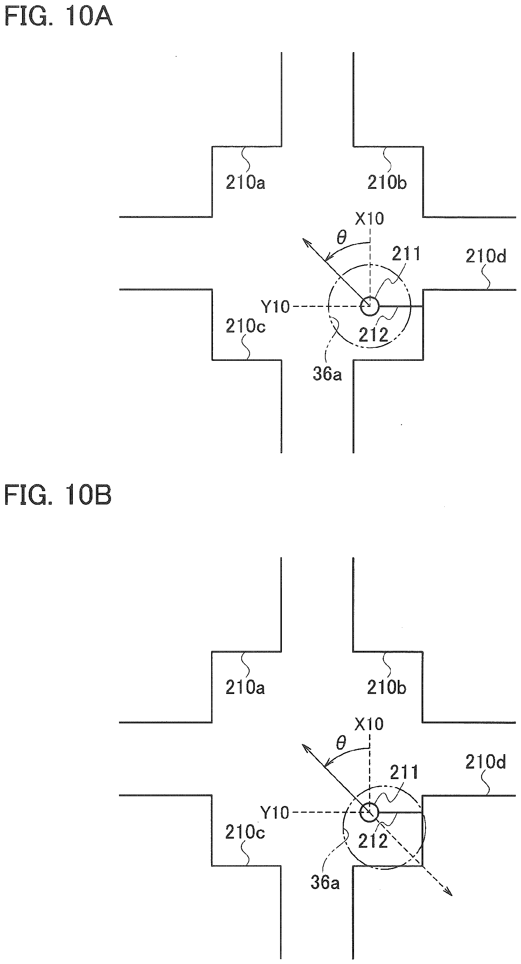

With reference to FIG. 10A to FIG. 10C, by taking a case where a piercing hole 211 of a product 210d is formed as an example, a case where an angle direction for displacing a position of a laser beam is set is described. In a case of a clockwise direction, an angle is assumed to be a plus-degree angle, and in a case of a counterclockwise direction, an angle is assumed to be a minus-degree angle. In this embodiment, it is assumed that an angle direction is a direction at -45 degrees.

As illustrated in FIG. 10A, according to the processing program, a position to be formed with the piercing hole 211 is set at coordinates (X10, Y10) on the sheet metal W. In a case where a position in which the sheet metal W is irradiated with a laser beam is positioned immediately below the center of the opening 36a of the nozzle 36, the NC device 50 may position the processing head 35 such that the center of the opening 36a is positioned at a position immediately above the piercing hole 211 that is the coordinates (X10, Y10). In a case where the center of the opening 36a is positioned at the coordinates (X10, Y10), the center of the opening 36a is positioned immediately above the position to be formed with the piercing hole 211.

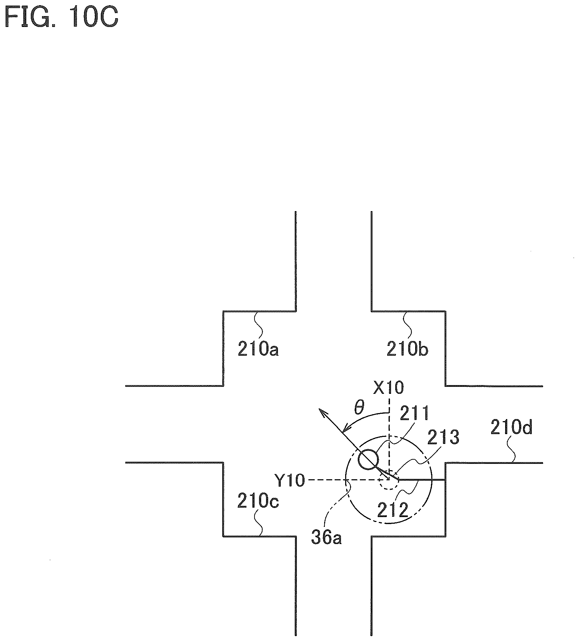

In one or more embodiments, by adopting a third displacement method illustrated in FIG. 10B, or a fourth displacement method illustrated in FIG. 10C, a position of a laser beam emitted through the opening 36a in the opening 36a is displaced from the center of the opening 36a to a position displaced in the set angle direction. The set angle direction corresponds to an angle direction away from the product 200. As similar to the first displacement method, the third displacement method is a displacement method in which the position of the piercing hole 211 set in the processing program is maintained. As similar to the second displacement method, the fourth displacement method is a displacement method in which the position of the piercing hole 211 set in the processing program is not maintained.

In the third displacement method, as illustrated in FIG. 10B, the NC device 50 displaces the processing head 35 such that the center of the opening 36a is positioned immediately above a position displaced in a direction at 135 degrees that is a direction opposite to the direction at - 45 degrees from the coordinates (X10, Y10). In addition, the NC device 50 changes an angle of the scanning mirror 321 or 323 of the galvano scanner unit 32 such that a position in which the sheet metal W is irradiated with a laser beam is set at the coordinates (X10, Y10). As a result, a position in which the sheet metal W is irradiated with a laser beam is displaced on the side away in the direction at -45 degrees from a position immediately below the center of the opening 36a instead of a position immediately below the center of the opening 36a.

In the fourth displacement method, as illustrated in FIG. 10C, the NC device 50 positions the processing head 35 such that the center of the opening 36a is set at the coordinates (X10, Y10). In addition, the NC device 50 changes an angle of the scanning mirror 321 or 323 of the galvano scanner unit 32 such that a position in which the sheet metal W is irradiated with a laser beam is positioned on the side away from the coordinates (X10, Y10) in the direction at - 45 degrees. As a result, a position in which the sheet metal W is irradiated with a laser beam is displaced on the side away from a position immediately below the center of the opening 36a in the direction at -45 degrees instead of a position immediately below the center of the opening 36a.

In a case where the fourth displacement method illustrated in FIG. 10C is adopted, the processing program needs to be modified such that the NC device 50 changes a position to be formed with the piercing hole 211 and newly sets an approach path 213 from the piercing hole 211 to the middle of the originally set approach path 212. Accordingly, the third displacement method is more preferable than the fourth displacement method. The approach path 212 may be connected to the approach path 213 at a position in which a length from an end portion of the approach path 212 on the product 210d side exceeds the half of a length of the originally set approach path 212.

In FIG. 9, in a case where the piercing holes 211 are formed to products 210a, 210b, and 210c, positions in which the sheet metal W is irradiated with a laser beam may be displaced from the center of the opening 36a to respectively sides away in the direction at 135 degrees, the direction at -135 degrees, and the direction at 45 degrees. Even when a position of a laser beam is displaced from the center of the opening 36a to the set angle direction, the position of the laser beam may be displaced to a position away from a product corresponding to each piercing hole.

Instead of setting, to the processing program, an angle direction for displacing a position of a laser beam with which the sheet metal W is irradiated, an operator may operate an operation unit 40 to set an angle direction and the NC device 50 may make a control to displace a position of a laser beam with which the sheet metal W is irradiated.

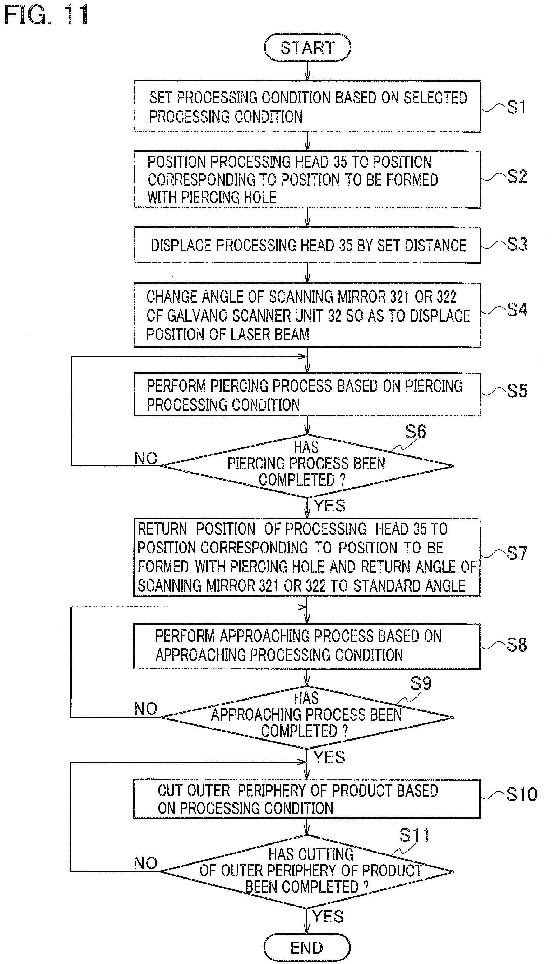

With reference to a flowchart illustrated in FIG. 11, a processing operation performed on the sheet metal W by the laser processing machine according to one or more embodiments and processing performed on the sheet metal W based on the laser processing method according to one or more embodiments are described. FIG. 11 illustrates a flowchart in a case where the first or third displacement method is adopted.

In FIG. 11, after the processing is performed on the sheet metal W, the NC device 50 sets a processing condition in step S1 based on a selected processing condition. The processing conditions include information for selecting a piercing processing condition and information for selecting an approaching processing condition in addition to a processing condition for cutting an outer periphery of a product. The processing conditions include a movement rate of the processing head 35, laser power, an oscillating frequency and a duty of a laser beam, gas pressure and kinds of gas of assist gas, a distance between the sheet metal W and the nozzle 36 that is a nozzle gap and the like.

The piercing processing conditions include laser power, an oscillating frequency and a duty of a laser beam, gas pressure and kinds of gas of assist gas, a nozzle gap, a time required for forming a piercing hole and the like. The approaching processing conditions include a movement rate of the processing head 35, laser power, an oscillating frequency and a duty of a laser beam, gas pressure and kinds of gas of assist gas, a nozzle gap and the like.

The NC device 50, in step S2, positions the processing head 35 to a position corresponding to a position to be formed with a piercing hole and, in step S3, displaces the processing head 35 by a set distance, to a position on the product side as illustrated in FIG. 5B or FIG. 10B. The set distance corresponds to a distance for displacing e a position in which the sheet metal W is irradiated with a laser beam from a position immediately below the center of the opening 36a. A process in step S2 and a process in step S3 do not need to be performed separately. That is, the processing head 35 positioned at a predetermined position may be positioned at a position displaced by the set distanced from a position corresponding to a position to be formed with a piercing hole without once positioning at a position corresponding to a position to be formed with a piercing hole.

A distance for displacing a position in which the sheet metal W is irradiated with a laser beam from a position immediately below the center of the opening 36a becomes preferably long as a diameter (a nozzle diameter) of the opening 36a becomes large. A distance for displacing a laser beam may be set to have a specific numerical value such as, for example, 100 pm, or may be set at a rate of, for example, 10 % of the nozzle diameter.

The NC device 50, in step S4, changes an angle of the scanning mirror 321 or 323 set to the reference angle of the galvano scanner unit 32 so as to displace a position of a laser beam emitted through the opening 36a in the opening 36a.

The NC device 50, in step S5, controls the laser processing machine 100 to perform a piercing process in which a nozzle gap is set based on a piercing processing condition and the sheet metal W is irradiated with a laser beam while jetting assist gas onto the sheet metal W. The NC device 50, in step S6, determines whether a piercing process has been completed. If the piercing process has not been completed (NO), the NC device 50 repeats the process of steps S5 and S6, and if the piercing process has been completed (YES), the NC device 50 advances a process to a process of step S7. If the piercing process has been completed, the NC device 50 may once stop the emission of a laser beam.

The NC device 50, in step S7, returns a position of the processing head 35 to a position corresponding to a position to be formed with a piercing hole and returns an angle of the scanning mirror 321 or 323 to a standard angle. The NC device 50, in step S8, controls the laser processing machine 100 to perform the approaching process in which the nozzle gap is set based on the approaching processing condition and the sheet metal W is irradiated with a laser beam while jetting assist gas onto the sheet metal W. A nozzle gap in step S8 is a considerably smaller distance than a nozzle gap in step S5. In a case where the approaching process is performed, it is possible to concurrently move an optical axis for the approaching process while returning a position of the processing head 35 to a position to be formed with a piercing hole (optical axis).

The NC device 50, in step S9, determines whether the approaching process has been completed. If the approaching process has not been completed (NO), the NC device 50 repeats processes of steps S8 and S9, and if the approaching process has been completed (YES), the NC device 50 advances a process to a process in step S10. After the approaching process has been completed, the NC device 50 may once stop the emission of a laser beam.

The NC device 50 controls the laser processing machine 100 such that, in step S10, the nozzle gap is set based on the processing condition, the sheet metal W is irradiated with a laser beam while jetting assist gas onto the sheet metal W, and an outer periphery of a product is cut. Similarly, a nozzle gag in step S10 is a considerably smaller distance than a nozzle gap in step S5.

The NC device 50, in step S11, determines whether cutting of an outer periphery of a product has been completed. If cutting of an outer periphery of a product has not been completed (NO), the NC device 50 repeats processes of steps S10 and S11 and if cutting of an outer periphery of a product has been completed (YES), the NC device 50 ends the processing performed on the sheet metal W.

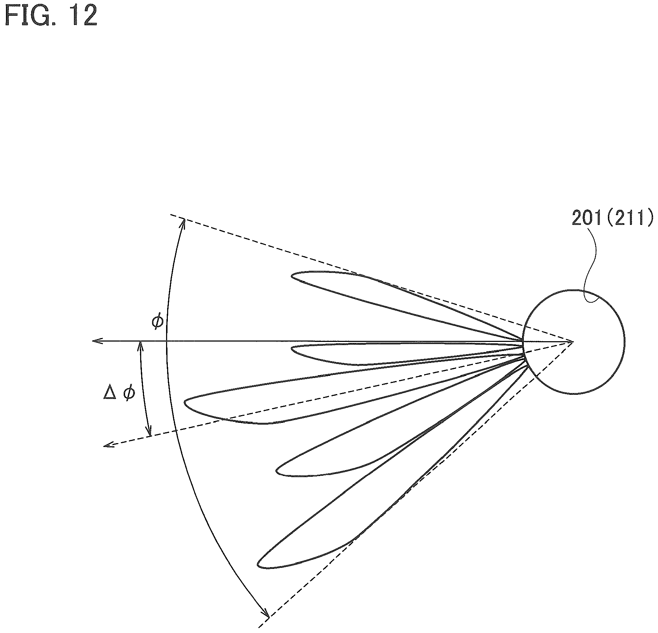

With reference to FIG. 12, FIG. 13A and FIG. 13B, and FIG. 14A and FIG. 14B, effects of the laser processing machine and the laser processing method according to one or more embodiments verified by the inventor(s) are described. The sputtered material Sp is preferably caused to be attached to an angle range of the sheet metal W which is as narrow as possible. The sputtered material Sp is preferably attached in a direction which has a difference from a direction in which a laser beam is displaced as small as possible.

As illustrated in FIG. 12, in a case where the sputtered material Sp is attached to the vicinity of the piercing hole 201 or 211, an angle in which the sputtered material Sp is widened in a fan shape is defined as a widening angle ϕ, and a difference between a direction in which a laser beam is displaced and an angle direction of the center of the sputtered material Sp that is widened in a fan shape is defined as a direction angle difference Δϕ. As the widening angle ϕ and the direction angle difference Δϕ are small, it is more possible to control a direction in which molten metal Wmelt is attached.

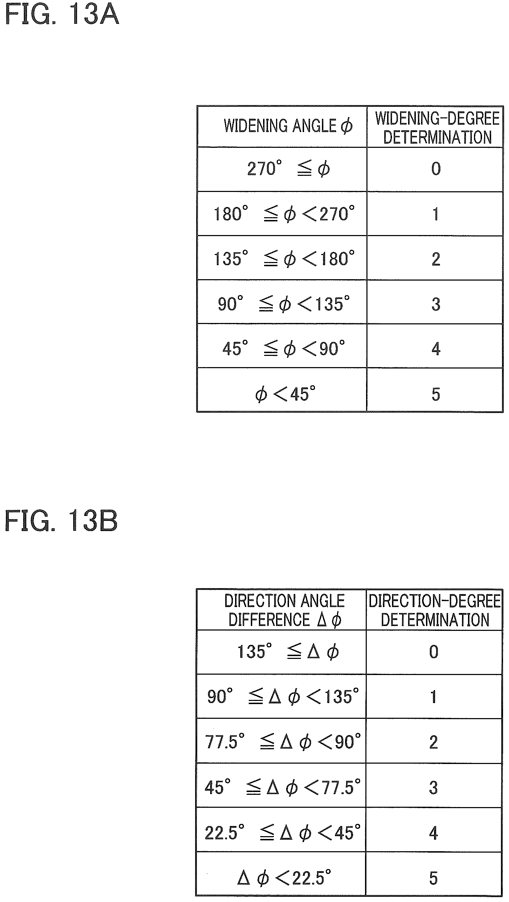

Correspondence relationships between the widening angles ϕ and widening-determination degrees are defined as illustrated in FIG. 13A. As an example, in a case where the widening angles ϕ are 270 degrees or more, are in a range from 180 degrees or more to less than 270 degrees, are in a range from 135 degrees or more to less than 180 degrees, are in a range from 90 degrees or more to less than 135 degrees, are in a range from 45 degrees or more to less than 90 degrees, and are less than 45 degrees, the widening-determination degrees are respectively defined as 0, 1, 2, 3, 4, and 5. The widening-determination degrees are preferably as large as possible.

Correspondence relationships between the direction angle differences Δϕ and direction-determination degrees are defined as illustrated in FIG. 13B. As an example, in a case where the direction angle differences Δϕ are 135 degrees or more, are in a range from 90 degrees or more to less than 135 degrees, are in a range from 77.5 degrees or more to less than 90 degrees, are in a range from 45 degrees or more to less than 77.5 degrees, are in a range from 22.5 degrees or more to less than 45 degrees, and are less than 22.5 degrees, the direction-determination degrees are respectively defined as 0, 1, 2, 3, 4, and 5. The direction-determination degrees are also preferably as large as possible.

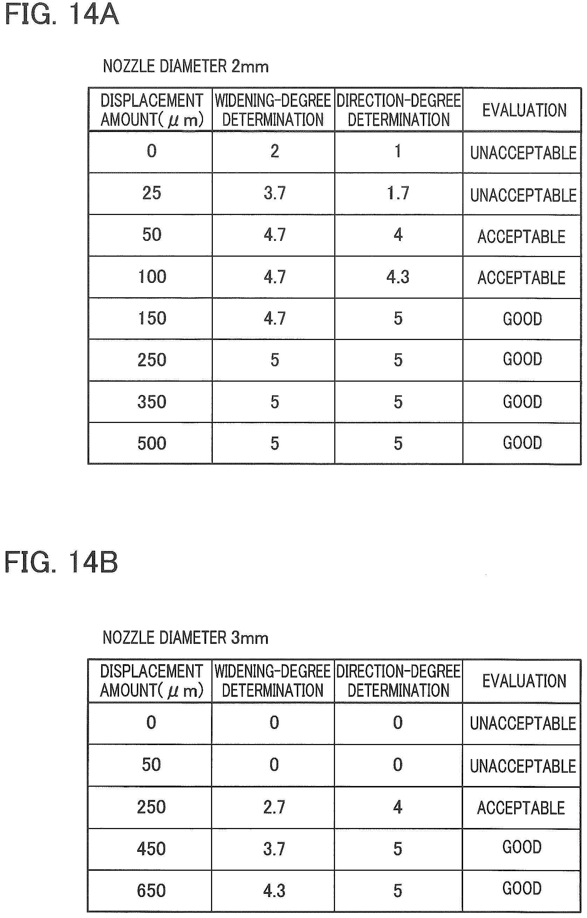

In FIG. 14A and FIG. 14B, a distance for displacing a position of a laser beam with which the sheet metal W is irradiated from a position immediately below the center of the opening 36a is defined as a displacement amount. The distance Δs illustrated is FIG. 6 is a displacement amount. The widening-determination degrees and the direction-determination degrees in FIG. 14A and FIG. 14B illustrate average values in a case where a piercing process is performed three times.

FIG. 14A illustrates relationships between displacement amounts, and widening-determination degrees, direction-determination degrees, and evaluations in a case where a piercing process is performed, as the sheet metal W, on stainless steel having a thickness of 6 mm under a condition that the nozzle 36 having a diameter of 2 mm and laser power of 4 kw are used.

As illustrated in FIG. 14A, under a condition that a nozzle has a diameter of 2 mm, in a case where a displacement amount is in a range from 0 µm to 25 pm, the widening-determination degrees and the direction-determination degrees are small and it is evaluated as "unacceptable." In a case where a displacement amount is in a range from 50 µm to 100 pm, both the widening-determination degrees and the direction-determination degrees become large, and it is evaluated as "acceptable." In a case where a displacement amount is 150 µm or more, both the widening-determination degrees and the direction-determination degrees take values of five or values approximating to five and it is evaluated as "good." In a case where the nozzle 36 having a diameter of 2 mm is used, a displacement amount is preferably 50 µm or more and is more preferably 150 µm or more.

FIG. 14B illustrates relationships between displacement amounts, and widening-determination degrees, direction-determination degrees, and evaluations in a case where the nozzle 36 having a diameter of 3 mm is used and under a condition similar to that in FIG. 14A, a piercing process is performed on the sheet metal W.

As illustrated in FIG. 14B, under a condition that a nozzle has a diameter of 3 mm, in a case where a displacement amount is in a range from 0 µm to 50 pm, both the widening-determination degrees and the direction-determination degrees are zero and it is evaluated as "unacceptable." In a case where a displacement amount is in a range from 50 µm to 250 pm, both the widening-determination degrees and the direction-determination degrees become large and it is evaluated as "acceptable." In a case where displacement amounts are 450 µm and 650 pm, the widening-determination degrees take values about four, the direction-determination degrees are five, and it is evaluated as "good." In a case where the nozzle 36 having a diameter of 3 mm is used, a displacement amount is preferably 250 µm or more and is more preferably 450 µm or more.

The NC device 50 may displace a position of a laser beam with which the sheet metal W is irradiated from a position immediately below the center of the opening 36a by a displace amount optimally set according to conditions such as a nozzle diameter, a shape of the nozzle 36, a nozzle gap in a case where a piercing process is performed, gas pressure of assist gas and the like.

The present invention is not limited to one or more embodiments described above, and various modifications are possible within the scope of the present invention, which is solely defined by the appended claims. In one or more embodiments, a case where a product is present inside a cutting-plane line and a piercing process is performed outside the cutting-plane line has been described, but in a case where a hole is formed inside the product, a piercing process may be performed within an area inside the product to be cut off. The present invention can be used for this case also.

## Claims

1. A laser processing machine configured to form a product (200) with an outer periphery from a sheet metal (W), the laser processing machine comprising:
a processing head (35) including a tip attached with a nozzle (36) with an opening (36a) through which a laser beam is emitted;
a moving mechanism (22, 23) configured to move the processing head (35) along a surface of the sheet metal (W);
a beam displacement mechanism (32) configured to displace a position of the laser beam emitted through the opening (36a) in the opening (36a);
an assist gas supply device (80) configured to supply, to the processing head (35), assist gas to be jetted onto the sheet metal (W) through the opening (36a) when the sheet metal (W) is processed; and
a control device (50) configured to control a cutting processing of the sheet metal (W),
**characterized in that**
the control device (50) is further configured to:
start the cutting processing by forming a piercing hole (201) and cutting along an approach path (202) towards the outer periphery of the product (200); and
control the beam displacement mechanism (32) such that, for forming the piercing hole (201), a position of the laser beam emitted through the opening (36a) in the opening (36a) is displaced from a center of the opening (36a) to a position in a direction away from the product (200),
so that a molten metal (Wmelt) of the sheet metal (W) melted by heat generated from the laser beam is blown away by the assist gas onto the surface of the sheet metal (W) in a direction away from the product (200).

2. The laser processing machine according to claim 1, wherein
the control device (50) is further configured to:
cause the moving mechanism (22, 23) to displace the processing head (35) on a product side such that the center of the opening (36a) is positioned from immediately above a position to be formed with the piercing hole (201) to immediately above a position displaced on the product side from the position to be formed with the piercing hole (201); and
cause the beam displacement mechanism (32) to displace the position of the laser beam in the opening (36a) from the center of the opening (36a) to a position corresponding to the position to be formed with the piercing hole (201) in a direction away from the product (200).

3. The laser processing machine according to claim 2, wherein a direction in which the processing head (35) is caused to be displaced by the moving mechanism (22, 23) is a direction along an approach path (202) to be cut from the piercing hole (201) to the product (200).

4. The laser processing machine according to claim 2, wherein the direction in which the processing head (35) is caused to be displaced by the moving mechanism (22, 23) is a predetermined angle direction relative to the approach path (202).

5. A laser processing method for forming a product (200) with an outer periphery from a sheet metal (W), the method comprising:
starting a cutting processing by forming a piercing hole (201) and cutting along an approach path (202) towards the outer periphery of the product (200);
**characterized in that**
the piercing hole (201) is formed by displacing a position of a laser beam emitted through an opening (36a) of a nozzle (36) attached to a tip of a processing head (35) in the opening (36a) from a center of the opening (36a) to a position in a direction away from the product (200); and
jetting assist gas onto the sheet metal (W) through the opening (36a) and blowing a molten metal (Wmelt) of the sheet metal (W) melted by heat generated from the laser beam in a direction away from the product (200).

6. The laser processing method according to claim 5, wherein
the processing head (35) is displaced on a product side such that the center of the opening (36a) is positioned from immediately above a position to be formed with the piercing hole (201) to immediately above a position displaced on the product side from the position to be formed with the piercing hole (201); and
the position of the laser beam in the opening (36a) is displaced from the center of the opening (36a) to a position corresponding to the position to be formed with the piercing hole (201) in the direction away from the product (200).

7. The laser processing method according to claim 6, wherein a direction in which the processing head (35) is caused to be displaced is a direction along an approach path (202) to be cut from the piercing hole (201) to the product (200).

8. The laser processing method according to claim 6, wherein the direction in which the processing head (35) is caused to be displaced is a predetermined angle direction relative to the approach path (202).

## Patentansprüche

1. Laserbearbeitungsvorrichtung, die konfiguriert ist, ein Produkt (200) mit einem Außenumfang aus einem Metallblech (W) zu bilden, wobei die Laserbearbeitungsvorrichtung umfasst:
einen Bearbeitungskopf (35), der eine Spitze umfasst, an der eine Düse (36) mit einer Öffnung (36a) befestigt ist, durch die ein Laserstrahl ausgestrahlt wird;
einen Bewegungsmechanismus (22, 23), der konfiguriert ist, den Bearbeitungskopf (35) entlang einer Oberfläche des Metallblechs (W) zu bewegen;
einen Strahlversatzmechanismus (32), der konfiguriert ist, eine Position des durch die Öffnung (36a) ausgestrahlten Laserstrahls in der Öffnung (36a) zu versetzen;
eine Prozessgas-Zuführungsvorrichtung (80), die konfiguriert ist, dem Bearbeitungskopf (35) ein Prozessgas zuzuführen, das durch die Öffnung (36a) auf das Metallblech (W) auszustoßen ist, wenn das Metallblech (W) bearbeitet wird; und
eine Steuerungsvorrichtung (50), die konfiguriert ist, eine Schneidbearbeitung des Metallblechs (W) zu steuern,
**dadurch gekennzeichnet, dass**
die Steuerungsvorrichtung (50) ferner konfiguriert ist, um:
die Schneidbearbeitung zu starten, indem ein durchstechendes Loch (201) gebildet wird und entlang einer Annäherungsbahn (202) in Richtung des Außenumfangs des Produkts (200) geschnitten wird; und
den Strahlversatzmechanismus (32) so zu steuern, dass zur Ausbildung des durchstechenden Lochs (201) eine Position des durch die Öffnung (36a) ausgestrahlten Laserstrahls in der Öffnung (36a) von einer Mitte der Öffnung (36a) zu einer Position in einer Richtung weg von dem Produkt (200) versetzt wird,
so dass ein geschmolzenes Metall (Wmelt) des Metallblechs (W), das durch die von dem Laserstrahl erzeugte Wärme geschmolzen wird, von dem Prozessgas auf die Oberfläche des Metallblechs (W) in einer Richtung weg von dem Produkt (200) weggeblasen wird.

2. Die Laserbearbeitungsvorrichtung nach Anspruch 1, wobei
die Steuerungsvorrichtung (50) ferner konfiguriert ist, um:
zu bewirken, dass der Bewegungsmechanismus (22, 23) den Bearbeitungskopf (35) auf einer Produktseite so versetzt, dass die Mitte der Öffnung (36a) von unmittelbar über einer Position, die mit dem durchstechenden Loch (201) auszubilden ist, zu unmittelbar über einer Position positioniert wird, die auf der Produktseite von der Position versetzt ist, die mit dem durchstechenden Loch (201) auszubilden ist; und
zu bewirken, dass der Strahlversatzmechanismus (32) die Position des Laserstrahls in der Öffnung (36a) von der Mitte der Öffnung (36a) zu einer Position versetzt, die der Position entspricht, die mit dem durchstechenden Loch (201) auszubilden ist, in einer Richtung weg von dem Produkt (200).

3. Die Laserbearbeitungsvorrichtung nach Anspruch 2, wobei eine Richtung, in die der Bearbeitungskopf (35) durch den Bewegungsmechanismus (22, 23) versetzt wird, eine Richtung entlang einer Annäherungsbahn (202) ist, die von dem durchstechenden Loch (201) zu dem Produkt (200) zu schneiden ist.

4. Die Laserbearbeitungsvorrichtung nach Anspruch 2, wobei die Richtung, in die der Bearbeitungskopf (35) durch den Bewegungsmechanismus (22, 23) versetzt wird, eine vorgegebene Winkelrichtung relativ zu der Annäherungsbahn (202) ist.

5. Laserbearbeitungsverfahren zur Ausbildung eines Produkts (200) mit einem Außenumfang aus einem Metallblech (W), wobei das Verfahren umfasst:
Starten einer Schneidbearbeitung durch Ausbilden eines durchstechenden Lochs (201) und Schneiden entlang einer Annäherungsbahn (202) in Richtung des Außenumfangs des Produkts (200);
**dadurch gekennzeichnet, dass**
das durchstechende Loch (201) durch Versetzen einer Position eines Laserstrahls, der aus einer Öffnung (36a) einer Düse (36) ausgestrahlt wird, die an einer Spitze eines Bearbeitungskopfes (35) befestigt ist, in der Öffnung (36a) von einer Mitte der Öffnung (36a) zu einer Position in einer Richtung weg von dem Produkt (200) gebildet wird; und
Ausstrahlen von Prozessgas auf das Metallblech (W) durch die Öffnung (36a) und Blasen eines geschmolzenen Metalls (Wmelt) des Metallblechs (W), das durch die von dem Laserstrahl erzeugte Wärme geschmolzen wird, in eine Richtung von dem Produkt (200) weg.

6. Das Laserbearbeitungsverfahren nach Anspruch 5, wobei
der Bearbeitungskopf (35) auf einer Produktseite so versetzt wird, dass die Mitte der Öffnung (36a) von unmittelbar über einer Position, die mit dem durchstechenden Loch (201) auszubilden ist, zu unmittelbar über einer Position, die auf der Produktseite von der Position versetzt ist, die mit dem durchstechenden Loch (201) auszubilden ist, positioniert wird; und
die Position des Laserstrahls in der Öffnung (36a) von der Mitte der Öffnung (36a) zu einer Position entsprechend der Position, die mit dem durchstechenden Loch (201) auszubilden ist, in der Richtung weg von dem Produkt (200) versetzt wird.

7. Das Laserbearbeitungsverfahren nach Anspruch 6, wobei eine Richtung, in die der Bearbeitungskopf (35) versetzt wird, eine Richtung entlang einer Annäherungsbahn (202) ist, die von dem durchstechenden Loch (201) zu dem Produkt (200) zu schneiden ist.

8. Das Laserbearbeitungsverfahren nach Anspruch 6, wobei die Richtung, in die der Bearbeitungskopf (35) versetzt wird, eine vorgegebene Winkelrichtung relativ zu der Annäherungsbahn (202) ist.

## Revendications

1. Machine de traitement laser configurée pour former un produit (200) avec une périphérie externe à partir d'une tôle (W), la machine de traitement laser comprenant :
une tête de traitement (35) comprenant une pointe attachée à une buse (36) avec une ouverture (36a) à travers laquelle un faisceau laser est émis ;
un mécanisme de déplacement (22, 23) configuré pour déplacer la tête de traitement (35) le long d'une surface de la tôle (W) ;
un mécanisme de déplacement de faisceau (32) configuré pour changer une position du faisceau laser émis à travers l'ouverture (36a) dans l'ouverture (36a) ;
un dispositif d'alimentation de gaz d'assistance (80) configuré pour alimenter à la tête de traitement (35) un gaz d'assistance à projeter sur la tôle (W) à travers l'ouverture (36a) quand la tôle (W) est traitée ; et
un dispositif de contrôle (50) configuré pour contrôler un traitement de découpe de la tôle (W),
**caractérisée en ce que** le dispositif de contrôle (50) est en outre configuré pour :
démarrer le traitement de découpe en formant un trou de perçage (201) et en coupant le long d'un chemin d'approche (202) vers la périphérie externe du produit (200) ; et
contrôler le mécanisme de déplacement de faisceau (32) de telle sorte que, pour former le trou de perçage (201), une position du faisceau laser émis à travers l'ouverture (36a) dans l'ouverture (36a) est changée depuis un centre de l'ouverture (36a) vers une position dans une direction opposée au produit (200),
de telle sorte qu'un métal fondu (Wmelt) de la tôle (W), fondu par la chaleur générée par le faisceau laser, est soufflé par le gaz d'assistance sur la surface de la tôle (W) dans une direction opposée au produit (200).

2. Machine de traitement laser selon la revendication 1, dans laquelle
le dispositif de contrôle (50) est en outre configuré pour :
amener le mécanisme de déplacement (22, 23) à déplacer la tête de traitement (35) sur un côté produit de telle sorte que le centre de l'ouverture (36a) est positionné depuis immédiatement au-dessus d'une position à former avec le trou de perçage (201) jusqu'à immédiatement au-dessus d'une position décalée du côté produit depuis la position à former avec le trou de perçage (201) ; et
amener le mécanisme de déplacement de faisceau (32) à changer la position du faisceau laser dans l'ouverture (36a) depuis le centre de l'ouverture (36a) jusqu'à une position correspondant à la position à former avec le trou de perçage (201) dans une direction opposée au produit (200) .

3. Machine de traitement laser selon la revendication 2, dans laquelle une direction dans laquelle la tête de traitement (35) est amenée à être déplacée par le mécanisme de déplacement (22, 23) est une direction le long d'un chemin d'approche (202) à découper depuis le trou de perçage (201) jusqu'au produit (200).

4. Machine de traitement laser selon la revendication 2, dans laquelle la direction dans laquelle la tête de traitement (35) est amenée à se déplacer par le mécanisme de déplacement (22, 23) est une direction angulaire prédéterminée par rapport au chemin d'approche (202).

5. Procédé de traitement laser pour former un produit (200) avec une périphérie externe à partir d'une tôle (W), le procédé comprenant :
le démarrage d'un processus de découpe en formant un trou de perçage (201) et en découpant le long d'un chemin d'approche (202) vers la périphérie externe du produit (200) ;
**caractérisé en ce que** le trou de perçage (201) est formé en changeant une position d'un faisceau laser émis à travers une ouverture (36a) d'une buse (36) attachée à une pointe d'une tête de traitement (35) dans l'ouverture (36a) depuis un centre de l'ouverture (36a) jusqu'à une position dans une direction opposée au produit (200) ; et en projetant un gaz d'assistance sur la tôle (W) à travers l'ouverture (36a) et en soufflant un métal fondu (Wmelt) de la tôle (W) fondu par la chaleur générée par le faisceau laser dans une direction opposée au produit (200).

6. Procédé de traitement laser selon la revendication 5, dans lequel
la tête de traitement (35) est déplacée côté produit de telle sorte que le centre de l'ouverture (36a) est positionné depuis immédiatement au-dessus d'une position à former avec le trou de perçage (201) jusqu'à immédiatement au-dessus d'une position déplacée côté produit depuis la position à former avec le trou de perçage (201) ; et
la position du faisceau laser dans l'ouverture (36a) est changée depuis le centre de l'ouverture (36a) jusqu'à une position correspondant à la position à former avec le trou de perçage (201) dans la direction opposée au produit (200) .

7. Procédé de traitement laser selon la revendication 6, dans lequel une direction dans laquelle la tête de traitement (35) est amenée à se déplacer est une direction le long d'un chemin d'approche (202) à découper depuis le trou de perçage (201) jusqu'au produit (200).

8. Procédé de traitement laser selon la revendication 6, dans lequel la direction dans laquelle la tête de traitement (35) est amenée à se déplacer est une direction angulaire prédéterminée par rapport au chemin d'approche (202) .
